# EUROPEAN PATENT SPECIFICATION

(11) **EP 2 745 697 B1**
(45) Date of publication and mention of the grant of the patent: **16.12.2015**
(21) Application number: 13199040.0
(22) Date of filing: 20.12.2013
(51) Int. Cl.: A21C 9/08, A21C 13/02

(54) **Plant for the production of bakery products comprising a device for supporting and moving food dough**
Anlage zur Herstellung von Backwaren mit einer Vorrichtung zum Tragen und Bewegen von Lebensmittelteig
Usine de production de produits de boulangerie comprenant un dispositif de support et de manutention de pâte comestible

(30) Priority: 20.12.2012 IT VI20120339
(43) Date of publication of application: 25.06.2014
(73) Proprietor: ITECA Impianti Tecnologici Alimentari Speciali S.P.A., 37050 Palu (Verona) (IT)
(72) Inventor: Benetti, Luigi, 37100 Verona (VR) (IT)
(74) Representative: Autuori, Angelo

(56) References cited:
- DE-B- 1 133 683
- US-A- 3 007 583
- US-A- 3 266 616
- US-A- 3 620 352

## Description

### Field of the invention

The present invention is generally applicable in the technical field of the food industry, and particularly relates to a plant for the production of bakery products comprising a device for supporting and moving food dough according to the preamble of claim 1.

### Prior art

It is known that the so-called bakery products such as bread, rusks and the like are generally products deriving from one or more suitably worked lumps of food dough that are kept for a predetermined operative time in one or more sections of a plant for the production of such products, for example in a leavening cell and/or in a seasoning room.

For example, the food dough is put in suitable devices which, once connected to a suitable transport system, for example a chain, firstly take the dough itself inside the section of the leavening cell for a first operative time and then inside the baking section for a second operative time.

Obviously, the time and ways of the leavening and baking steps as well as the basic mixture to produce the lumps of food dough vary depending on what product is to be obtained.

In order to maximize the plant production, as much food dough as possible should pass the different sections of the plant itself. For this purpose, devices for supporting and moving the dough are known, commonly called "swing trays", which are suitable for transporting at the same time a great number of lumps of such dough.

Such devices are susceptible to improvements of the lightweight and strength thereof, as well as in terms of capacity to transport a certain quantity of food dough.

The document US3007583 discloses a plant having all the features of the preamble of claim 1.

### Summary of the invention

It is an object of the present invention to at least partly overcome the above mentioned drawbacks, by providing a plant including a device for transporting and moving food dough with very high functionality, ease of construction and low cost.

Another object is to provide a plant having very high productivity.

Another object is to provide a plant including a highly strength device for the transport and moving of food dough.

Another object is to provide a plant including a relatively light device for the transportation and moving of food dough.

These and other objects, as better explained hereafter, are fulfilled by a plant according to claim 1.

Advantageous embodiments are described in the dependent claims.

### Brief description of the drawings

Further features and advantages of the invention will be more clear upon reading the detailed description of some preferred, not-exclusive embodiments of a plant including a device according to the invention, which are described as non limiting examples with the help of the annexed drawings in which:

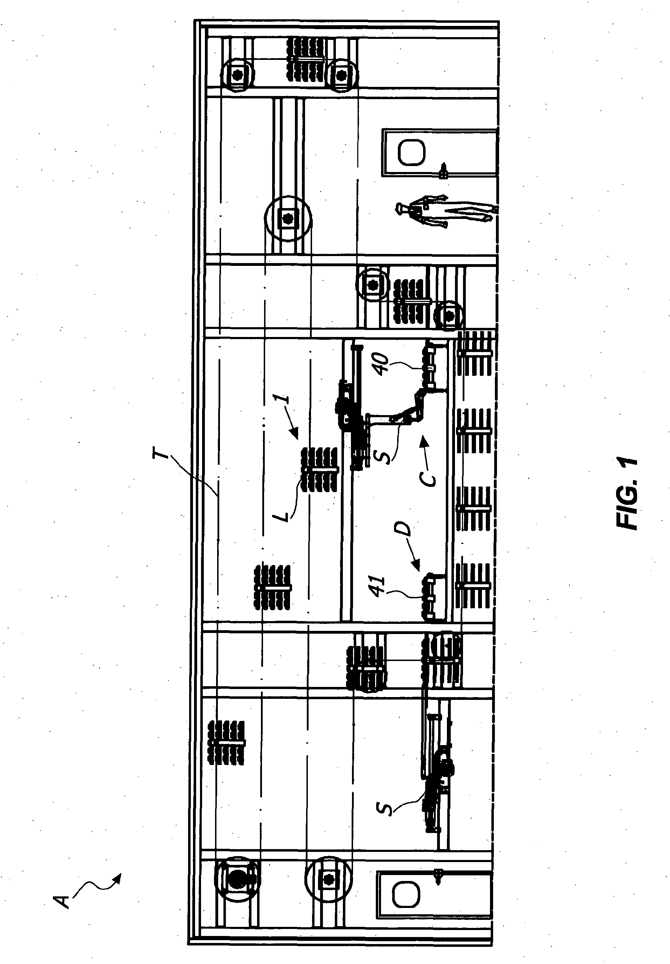

**FIG. 1** is a side schematic view of a section **A** of a plant for the production of bakery products including a plurality of devices **1**;

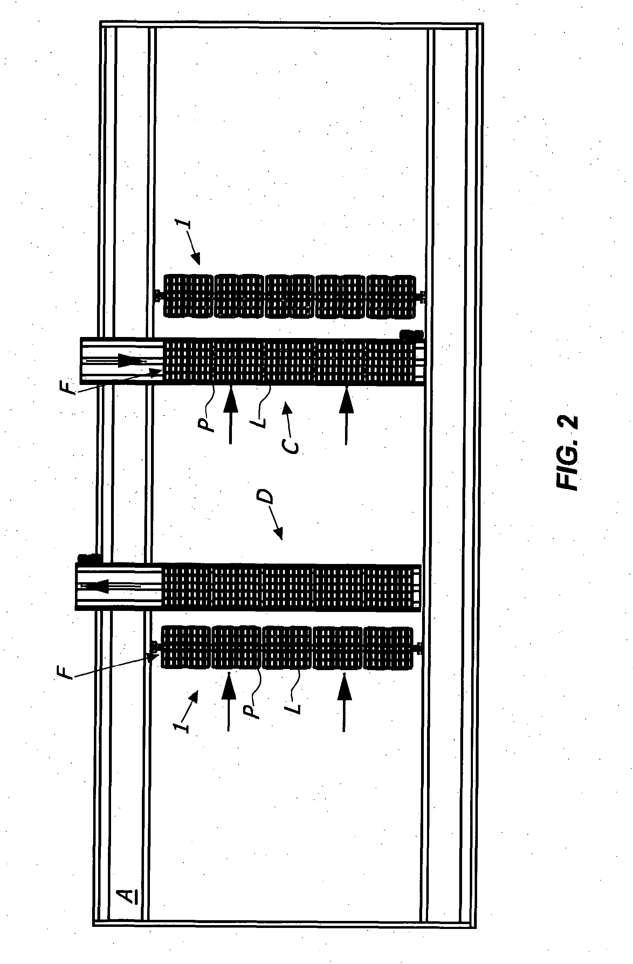

**FIG. 2** is a top view of the section **A** of FIG. 1;

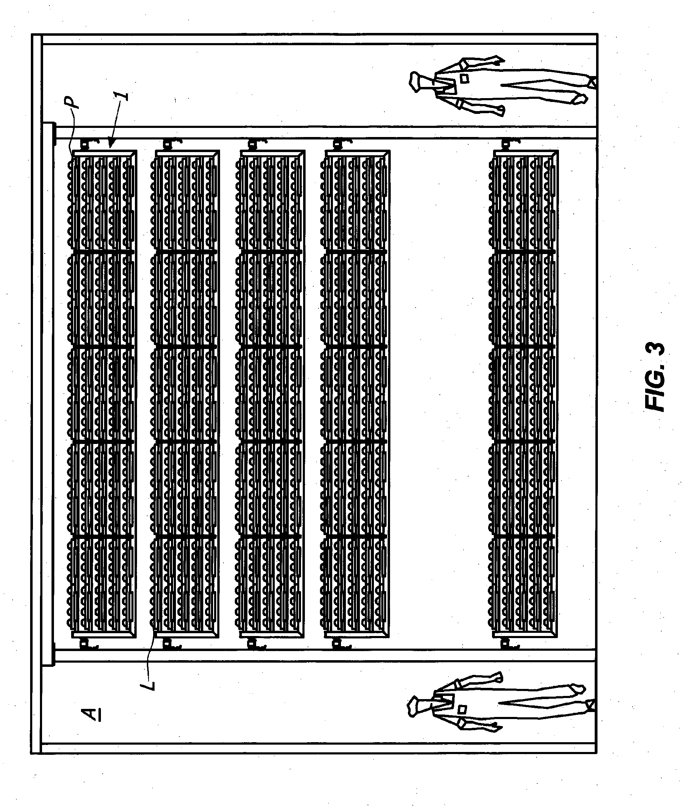

**FIG. 3** is another front view of the section **A** of FIG. 1;
**FIG. 4** and **5** are respectively top and side views of the device **1** on which the containers **P** are loaded;

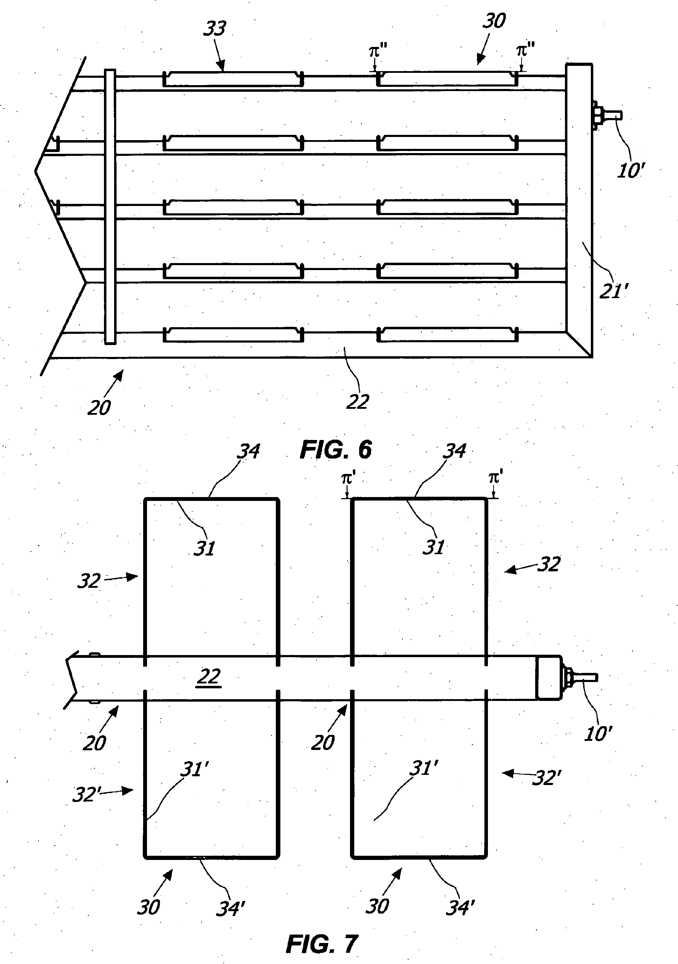

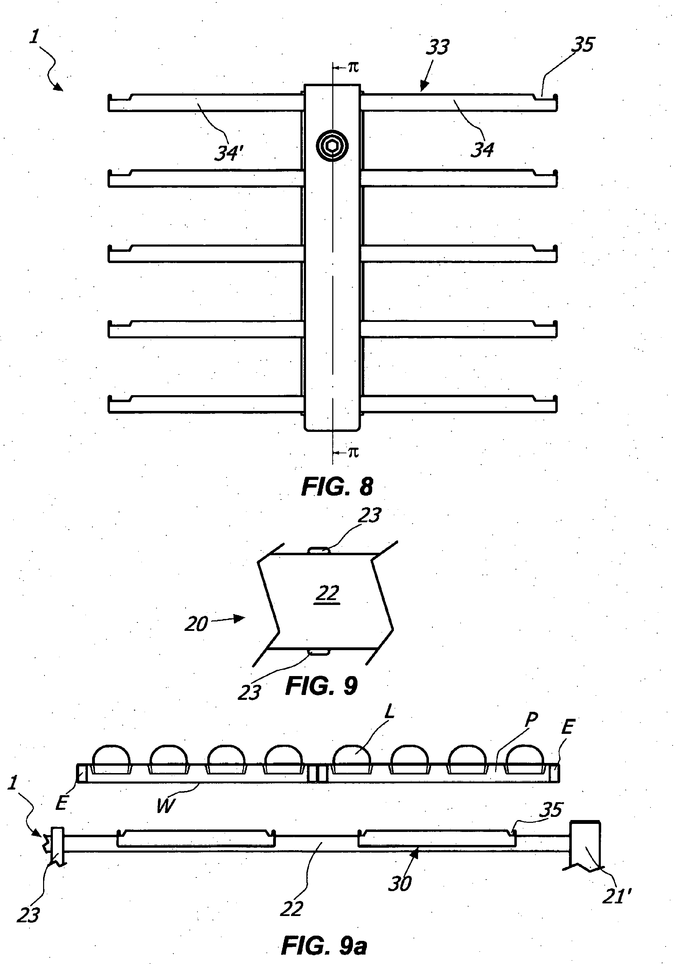

**FIG. 6, 7** and **8** are respectively front, top and side views of some particulars of the device 1 without containers **P**;
**FIG. 9** is an enlarged view of some particulars of a cross member **22** of the tubular frame **20** of the device **1**;
**FIG. 9a** is an enlarged view of some particulars of FIG. 5;
**FIG. 10** is a schematic top view of the loading step of the containers **P** on the device **1;**
**FIGs. 11a** and **11b** are schematic views of the conveyor belt **41** in which separating elements are respectively in the work and the rest positions.

### Detailed description of some examples of preferred embodiments

With reference to the above cited figures, the device, generally indicated with **1,** is included in a plant for the production of bakery products for supporting and moving food dough through one or more sections **A** of the plant itself, a leavening cell as a non limiting example.

For this purpose, the device **1** includes a couple of end pins **10, 10'** connectable to a transport system **T** of the chain type or the like, which advantageously defines a closed-loop path within the section **A.**

The present invention includes equal or similar parts and/or elements. Unless otherwise specified, equal or similar parts and/or elements are indicated with a single reference number, this meaning that the described technical features are common to all the equal or similar parts and/or elements.

Essentially, the device **1** comprises a frame **20,** preferably a tubular frame, defining a plane **n** and a plurality of support elements **30** suitable for supporting respective substantially planar containers **P.** Each of these containers is suitable for containing one or more lumps of food dough **L,** in a *per se* known manner.

The tubular frame **20** includes two end rods **21, 21'** substantially parallel to each other and operatively connectable to the transport system **T** by means of pins **10, 10'** and a plurality of cross members **22** substantially parallel to each other and substantially perpendicular to the rods **21, 21'.**

Conveniently, the pins **10, 10'** may be positioned on the rods **21, 21'** so that the line passing through them remains above the centre of mass of the device **1,** so that the risk of its overturning is minimized.

Advantageously, each support element **30** may include one couple of substantially "U"-shaped laminar elements **31, 31'** extending from opposite sides with respect to the respective cross member **22** in order to define therewith respective annular elements **32, 32'.**

The latter may reciprocally cooperate so as to define a shelf **33** suitable for supporting a respective container **P.** Preferably, each laminar element **31, 31'** is obtained from one single suitably molded metal sheet.

Conveniently, each of the substantially "U"-shaped laminar elements **31, 31'** has a side wall **34, 34'** defining a plane **π'** substantially perpendicular to the plane **n"** defined by the respective support shelf **33**.

In this way, the possibility for flour or dirt slipping from the lumps of food dough **L** to accumulate on the support elements is minimized. This in turn simplifies the periodic cleaning and disinfecting of the device **1.**

In order to further improve this aspect, both the tubular frame **20** and the support elements **30** may be free of passing-through openings for avoiding dirt and impurities to accumulate inside them.

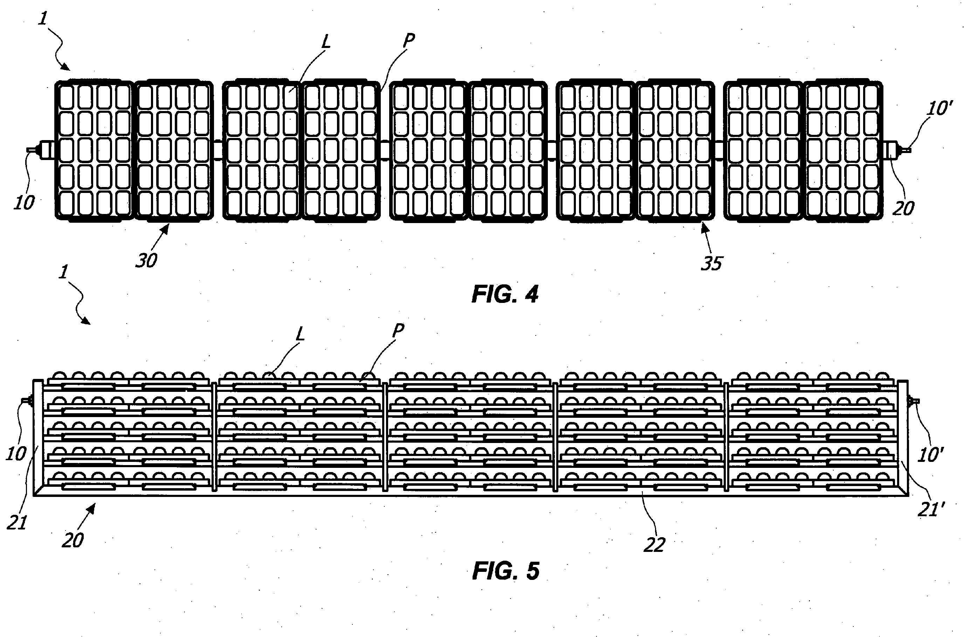

Advantageously, each of the substantially planar containers **P** may include a bottom wall **W** with a preferably continuous peripheral edge **E.** Likewise, the substantially "U"-shaped laminar elements **31, 31'** may include respective molded end seats **35** suitable for housing the peripheral edge **E** of the containers **P** in order to avoid the slipping thereof during the transportation, as for example shown in FIG. 4.

The support elements **30** are placed side-by-side in order to define support planes substantially perpendicular to the plane **n,** substantially coincident with the support shelves **33,** susceptible to supporting a row **F** of substantially coplanar containers **P.**

The support elements **30** are further superimposed so that the shelves **33** are parallel to each other. As particularly shown in FIG. 5, each cross member **22** may support one respective row **F** of containers **P.**

Thanks to the above described features, the device **1** allows to maximize the productivity of the plant on which it is mounted.

Advantageously, the device **1** and the containers **P** define an apparatus operatively connectable to the transport system **T** to support and move food dough **L** across the section **A** of a plant for the production of bakery products.

In order to load and unload the containers **P** onto and from the shelves **33** of the device **1**, the section **A** includes a specific loading zone **C** and unloading zone **D**.

Both the loading zone **C** and the unloading zone **D** may include respective conveyor belts **40, 41** operatively connected respectively to the plant sections which precede and follow the section **A.** Both the loading zones **C** and the unloading zone **D** may further include respective pushing devices **S** suitable for pushing the rows **F** of containers **P** from the conveyor belt **40** on the shelves **33** and conversely from the latter to the conveyor belt **41.**

In order to maximize the plant productivity, both the tubular frame **20** and the support elements **30** are configured in such a way to have enough space for at least three reciprocally superimposed rows **F** of containers **P,** preferably at least four rows and even more preferably five rows of containers **P.**

In this case, the weight of the containers **P** would tend to make the cross members **22** bend, with the consequence of misalignment of said cross members with the conveyor belts **40, 41** at the moment of loading and unloading. In order to avoid this problem, the tubular frame **20** may include at least one elongated reinforcing member **23** extending between at least two of the cross members **22,** preferably parallel to the rods **21, 21'.**

The said at least one elongated reinforcing member may have any configuration and may extend between any number of cross members **22.**

In a preferred but not-exclusive embodiment, the elongated reinforcing member **23** may extend continuously between the first and the last of the cross members **22,** that is between the top and the bottom cross members of the frame **20.**

Advantageously, one of the cross members **22,** preferably the last or the bottom ones, may have a greater flexural strength than the other ones.

In this manner, the weight of the containers **P** with food dough **L** is loaded on the last cross member **22** or on the lower one which for example may have a diameter and/or thickness greater than the other ones, so as to avoid deflections of the shelves **33** and to ensure the continuity of the loading and unloading steps.

Conveniently, in order to lighten the structure, the tubular frame **20** and the support elements **30** may be made of aluminum. However, the same may be made of any other material, for example steel.

For the correct loading of the containers **P** on the shelves **33,** the loading conveyor belt **40** includes at least one separating element **42** suitable for separating the containers **P** of each row **F.** The separating element **42** is placed in correspondence to the elongated reinforcing element **23.**

Each separating element **42** may be concealedly movably mounted within a respective basis **43.** For example, every separating element **42** may include a pneumatic cylinder.

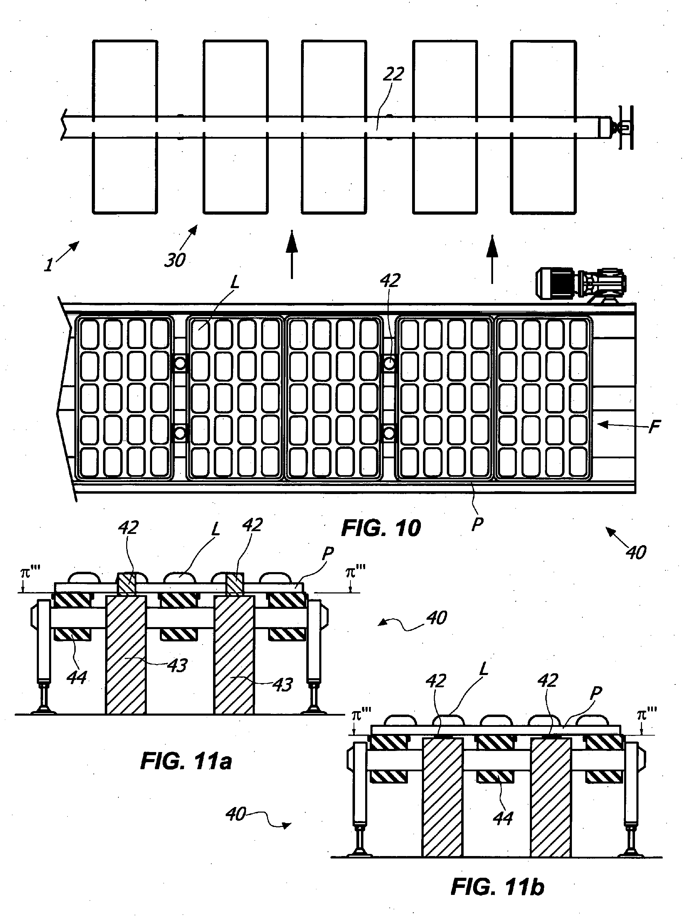

The loading conveyor belt **40** includes at least one carrier belt **44** for the moving of the containers **P.** The separating elements **42** are susceptible to selectively moving between a rest position, as shown in FIG. 11b, in which they lie below the plane **π"'** defined by the carrier element **44** and a working position, shown in FIG. 11a, in which they come out therefrom for mutually separating the containers **P** to be loaded.

In light of what has been described above, it is self-evident that the invention fulfills the intended objects.

The invention is susceptible to many changes and variants, all falling within the inventive concept expressed in the annexed claims. All particulars may be replaced by other technically equivalent elements, and the materials may be different according to the needs, without departing from the scope of the invention defined in the annexed claims.

## Claims

1. A plant for the production of bakery products, including:
- a transport system **(T)** of the type chain for supporting and moving food dough **(L)** through at least one section **(A)** of the plant;
- a plurality of devices **(1)** connected to said transport system **(T);**
- a plurality of substantially planar containers **(P)** each susceptible to containing one or more food dough lump **(L);**
wherein each of said devices comprises a frame **(20)** defining a plane **(π)** and a plurality of support elements (**30**) for supporting said substantially planar containers (**P**), said support elements (**30**) being flanked side by side to define shelves (**33**) substantially perpendicular to said plane (**n**) susceptible to supporting a row (**F**) of substantially planar containers (**P**) substantially coplanar with each other, said support elements (**30**) being further superimposed on each other so that said shelves (**33**) are parallel to each other;
wherein said frame (**20**) includes two end rods **(21, 21'**) substantially parallel to each other operatively connectable to the transport system (**T**) and a plurality of mutually overlapping cross members (**22**) substantially parallel to each other and substantially perpendicular to said end rods (**21, 21'**), said support elements (**30**) being connected to said cross members (**22**) so that each shelf (**33**) supports a respective row (**F**) of substantially planar containers **(P);**
wherein said frame (**20**) and said support elements (**30**) are configured to contain at least three superimposed rows (**F**) of substantially planar containers (**P**), the frame (**20**) including at least one elongated reinforcement member (**23**) interposed between said rods (**21, 21'**) and extending between at least two of said cross members **(22);**
wherein the plant further includes
- a loading zone **(C)** of the substantially planar containers **(P)** onto the devices **(1)** and a unloading zone **(D)** of the former **(P)** from the latter **(1),** said loading zone **(C)** including at least one conveyor belt **(40)** susceptible to supporting the row **(F)** of the substantially planar containers **(P)** to be loaded on the respective support shelf **(33)** of each device **(1);**
**characterized in that** said conveyor belt **(40)** includes at least one separator element **(42)** susceptible to mutually separating the substantially planar containers **(P)** of said row **(F),** said at least one separating element **(42)** being located in correspondence to said at least one elongated reinforcement member **(23);**
**and in that** said conveyor belt **(40)** includes at least one carrier element **(44)** for moving said substantially planar containers **(P),** said at least one separating element **(42)** being susceptible to selectively moving between a rest position in which it lies below the plane **(π'")** defined by said at least one carrier element **(44)** and a working position in which it comes out therefrom for mutually separating the substantially planar containers **(P)** to be loaded.

2. Plant according to claim 1, wherein each support element **(30)** includes a pair of substantially "U"-shaped laminar elements **(31, 31')** extending from opposite sides with respect to the respective cross member **(22)** to define therewith respective annular members **(32, 32'),** the latter cooperating between each other to define a respective shelf **(33)** for supporting a respective substantially planar container **(P).**

3. Plant according to the preceding claim, wherein each of said substantially "U"-shaped laminar elements **(31, 31')** has a side wall **(34, 34')** defining a plane **(π')** substantially perpendicular to the one **(π")** defined by the respective support shelf **(33)**.

4. Plant according to any one of the preceding claims, wherein each of said substantially planar containers **(P)** includes a bottom wall **(W)** with a peripheral edge **(E),** said substantially "U"-shaped laminar elements **(31, 31')** including respective end seats **(35)** for receiving said peripheral edge (**E**) of said substantially planar containers (**P**) to prevent slipping thereof during the transport.

5. Plant according to any one of the preceding claims, wherein said frame **(20)** and said support elements **(30)** are free of passing-through openings to prevent dirt and impurities accumulate inside them.

6. Plant according to any one of the preceding claims, wherein said at least one elongated reinforcing member **(23)** extends continuously between the first and the last of said cross members **(22),** one of the first and the last of said cross members **(22)** being the top cross member of said frame **(20),** the other of the first and the last of said cross members **(22)** being the bottom cross member of said frame **(20),** said at least one elongated reinforcing member **(23)** extending continuously between said top and bottom cross members.

7. Plant according to claim 6, wherein at least one of said cross members (22) has a flexural strength greater than the other, said at least one elongated reinforcing member (23) being configured so as to load the weight of the substantially planar containers (P) mainly on the latter.

## Patentansprüche

1. Anlage zur Produktion von Backwaren, enthaltend:
- ein Transportsystem (T) der Kettenart zum Stützen und Bewegen von Lebensmittelteig (L) durch zumindest eine Sektion (A) der Anlage;
- mehrere Vorrichtungen (1), die mit dem Transportsystem (T) verbunden sind;
- mehrere im Wesentlichen plane Behälter (P), die jeder zum Enthalten von einem oder mehr Lebensmittelteigballen (L) geeignet sind;
wobei jede der Vorrichtungen einen Rahmen (20), der eine Ebene (Π) definiert, und mehrere Stützelemente (30) zum Stützen der im Wesentlichen planen Behälter (P) umfasst, wobei die Stützelemente (30) einander nebeneinander flankierend zum Definieren von Fächern (33) im Wesentlichen senkrecht zur Ebene (Π) angeordnet sind, welche zum Stützen einer Reihe (F) von im Wesentlichen planen Behältern (P) im Wesentlichen komplanar miteinander geeignet sind, wobei die Stützelemente (30) ferner derart übereinander gelagert sind, dass die Fächer (33) parallel zueinander sind;
wobei der Rahmen (20) zwei Endstangen (21, 21') im Wesentlichen parallel zueinander, die betriebsfähig mit dem Transportsystem (T) verbindbar sind, und mehrere einander überdeckende Querglieder (22) im Wesentlichen parallel zueinander und im Wesentlichen senkrecht zu den Endstangen (21, 21') enthält, wobei die Stützelemente (30) derart mit den Quergliedern (22) verbunden sind, dass jedes Fach (33) eine jeweilige Reihe (F) von im Wesentlichen planen Behältern (P) stützt;
wobei der Rahmen (20) und die Stützelemente (30) zum Enthalten von zumindest drei einander überlagernden Reihen (F) von im Wesentlichen planen Behältern (P) konfiguriert sind, wobei der Rahmen (20) zumindest ein gestrecktes Verstärkungsglied (23) enthält, das zwischen den Stangen (21, 21') eingeschoben ist und zwischen zumindest zweien der Querglieder (22) verläuft;
wobei die Anlage ferner Folgendes enthält:
- eine Ladezone (C) der im Wesentlichen planen Behälter (P) auf die Vorrichtungen (1) und eine Abladezone (D) der Ersteren (P) von den Letzteren (1), wobei die Ladezone (C) zumindest ein Förderband (40) enthält, das zum Stützen der Reihe (F) der im Wesentlichen planen Behälter (P) geeignet ist, welche auf das jeweilige Stützfach (33) jeder Vorrichtung (1) abgeladen werden sollen;
**dadurch gekennzeichnet, dass** das Förderband (40) zumindest ein Trennelement (42) enthält, das zum Trennen der im Wesentlichen planen Behälter (P) der Reihe (F) voneinander geeignet ist, wobei sich das zumindest eine Trennelement (42) in Entsprechung zu dem zumindest einen gestreckten Verstärkungselement (23) befindet;
und dass das Förderband (40) zumindest ein Trägerelement (44) zum Bewegen der im Wesentlichen planen Behälter (P) enthält, wobei das zumindest eine Trennelement (42) dazu geeignet ist, sich selektiv zwischen einer Ruheposition, in der es unterhalb der Ebene (Π'") liegt, die durch das zumindest eine Trägerelement (44) definiert ist, und einer Arbeitsposition zu bewegen, in der es zum Trennen der im Wesentlichen planen Behälter (P), die geladen werden sollen, dort herauskommt.

2. Anlage nach Anspruch 1, wobei jedes Stützelement (30) ein Paar im Wesentlichen "U"-förmiger Lamellenelemente (31, 31') enthält, die von gegenüberliegenden Seiten bezüglich des jeweiligen Querelements (22) verlaufen, um damit jeweilige ringförmige Glieder (32, 32') zu definieren, wobei Letztere miteinander zum Definieren eines jeweiligen Fachs (33) zum Stützen eines jeweiligen, im Wesentlichen planen Behälters (P) zusammenwirken.

3. Anlage nach dem vorhergehenden Anspruch, wobei jedes der im Wesentlichen "U"-förmigen Lamellenelemente (31, 31') eine Seitenwand (34, 34') aufweist, die eine Ebene (Π') definiert, welche im Wesentlichen senkrecht zu jener (Π") steht, die durch das jeweilige Stützfach (33) definiert ist.

4. Anlage nach einem der vorhergehenden Ansprüche, wobei jeder der im Wesentlichen planen Behälter (P) eine Bodenwand (W) mit einer Umfangskante (E) enthält, wobei die im Wesentlichen "U"-förmigen Lamellenelemente (31, 31') jeweilige Endsitze (35) zum Aufnehmen der Umfangskante (E) der im Wesentlichen planen Behälter (P) enthalten, um Abgleiten davon während des Transports zu verhindern.

5. Anlage nach einem der vorhergehenden Ansprüche, wobei der Rahmen (20) und die Stützelemente (30) frei von Durchgangsöffnungen sind, um zu verhindern, dass sich Schmutz und Verunreinigungen darin ansammeln.

6. Anlage nach einem der vorhergehenden Ansprüche, wobei das zumindest eine gestreckte Verstärkungsglied (23) fortlaufend zwischen dem ersten und letzten der Querglieder (22) verläuft, wobei eines des ersten und des letzten der Querglieder (22) das obere Querglied des Rahmens (20) ist, wobei das andere des ersten und des letzten der Querglieder (22) das untere Querglied des Rahmens (20) ist, wobei zumindest ein gestrecktes Verstärkungsglied (23) fortlaufend zwischen dem oberen und unteren Querglied verläuft.

7. Anlage nach Anspruch 6, wobei zumindest eines der Querglieder (22) eine größere Biegefestigkeit als das andere aufweist, wobei das gestreckte Verstärkungsglied (23) zum Laden des Gewichts der im Wesentlichen planen Behälter (P) hauptsächlich auf dem Letzteren konfiguriert ist.

## Revendications

1. Installation destinée à la fabrication de produits de boulangerie, comprenant :
- un système de transport (T) du type chaîne permettant de supporter et de déplacer une pâte alimentaire (L) à travers au moins une section (A) de l'installation ;
- une pluralité de dispositifs (1) reliés audit système de transport (T) ;
- une pluralité de conteneurs sensiblement plans (P), chacun susceptible de contenir une ou plusieurs boules de pâte alimentaire (L) ;
dans laquelle chacun desdits dispositifs comprend une structure (20) définissant un plan (n) et une pluralité d'éléments de support (30) permettant de supporter lesdits conteneurs sensiblement plans (P), lesdits éléments de support (30) étant flanqués côte à côte pour définir des étagères (33) sensiblement perpendiculaires audit plan (n) susceptibles de supporter une rangée (F) de conteneurs sensiblement plans (P) sensiblement coplanaires les uns aux autres, lesdits éléments de support (30) étant en outre superposés les uns sur les autres de sorte que lesdites étagères (33) sont parallèles les unes aux autres ;
dans laquelle ladite structure (20) comprend deux tiges d'extrémité (21, 21') sensiblement parallèles l'une à l'autre pouvant être reliées de manière opérationnelle au système de transport (T) et une pluralité d'éléments transversaux se chevauchant mutuellement (22) sensiblement parallèles les uns aux autres et sensiblement perpendiculaires auxdites tiges d'extrémité (21, 21'), lesdits éléments de support (30) étant reliés auxdits éléments transversaux (22) de sorte que chaque étagère (33) supporte une rangée respective (F) des conteneurs sensiblement plans (P) ;
dans laquelle ladite structure (20) et lesdits éléments de support (30) sont configurés pour contenir au moins trois rangées superposées (F) de conteneurs sensiblement plans (P), la structure (20) comprenant au moins un élément de renforcement allongé (23) interposé entre lesdites tiges (21, 21') et s'étendant entre au moins deux desdits éléments transversaux (22) ;
dans laquelle l'installation comprend en outre
- une zone de chargement (C) de conteneurs sensiblement plans (P) sur les dispositifs (1) et une zone de déchargement (D) de ces premiers (P) en provenance de ces derniers (1), ladite zone de chargement (C) comprenant au moins un convoyeur à bande (40) susceptible de supporter la rangée (F) des conteneurs sensiblement plans (P) à charger sur l'étagère de support respective (33) de chaque dispositif (1) ;
**caractérisée en ce que** ledit convoyeur à bande (40) comprend au moins un élément séparateur (42) susceptible de séparer mutuellement les conteneurs sensiblement plans (P) de ladite rangée (F), ledit au moins un élément séparateur (42) étant situé en correspondance dudit au moins un élément de renforcement allongé (23) ;
et **en ce que** ledit convoyeur à bande (40) comprend au moins un élément porteur (44) permettant de déplacer lesdits conteneurs sensiblement plans (P), ledit au moins un élément séparateur (42) étant susceptible de se déplacer de manière sélective entre une position de repos dans laquelle il se trouve en dessous du plan (π'") défini par ledit au moins un élément porteur (44) et une position de fonctionnement dans laquelle il en sort pour séparer mutuellement les conteneurs sensiblement plans (P) à charger.

2. Installation selon la revendication 1, dans laquelle chaque élément de support (30) comprend une paire d'éléments laminaires sensiblement en forme de « U » (31, 31') s'étendant des côtés opposés par rapport à l'élément transversal respectif (22) pour définir ainsi des éléments annulaires respectifs (32, 32'), ces derniers coopérant les uns entre les autres pour définir une étagère respective (33) afin de supporter un conteneur sensiblement plan respectif (P).

3. Installation selon la revendication précédente, dans laquelle chacun desdits éléments laminaires sensiblement en forme de « U » (31, 31') a une paroi latérale (34, 34') définissant un plan (n') sensiblement perpendiculaire à celui (n") défini par l'étagère de support respective (33).

4. Installation selon l'une quelconque des revendications précédentes, dans laquelle chacun desdits conteneurs sensiblement plans (P) comprend une paroi inférieure (W) avec un bord périphérique (E), lesdits éléments laminaires sensiblement en forme de « U » (31, 31') comprenant des sièges d'extrémité respectifs (35) pour recevoir ledit bord périphérique (E) desdits conteneurs sensiblement plans (P) pour empêcher leur glissement pendant le transport.

5. Installation selon l'une quelconque des revendications précédentes, dans laquelle ladite structure (20) et lesdits éléments de support (30) sont dépourvus d'ouvertures traversantes pour empêcher la poussière et les impuretés de s'accumuler à l'intérieur.

6. Installation selon l'une quelconque des revendications précédentes, dans laquelle ledit au moins un élément de renforcement allongé (23) s'étend en continu entre le premier et le dernier desdits éléments transversaux (22), l'un parmi le premier et le dernier desdits éléments transversaux (22) étant l'élément transversal supérieur de ladite structure (20), l'autre parmi le premier et le dernier desdits éléments transversaux (22) étant l'élément transversal inférieur de ladite structure (20), ledit au moins un élément de renforcement allongé (23) s'étendant en continu entre lesdits éléments transversaux supérieur et inférieur.

7. Installation selon la revendication 6, dans laquelle au moins l'un desdits éléments transversaux (22) a une résistance à la flexion supérieure à l'autre, ledit au moins un élément de renforcement allongé (23) étant configuré de manière à charger le poids des conteneurs sensiblement plans (P) principalement sur ce dernier.
